# EUROPEAN PATENT SPECIFICATION

(11) **EP 2 887 746 B1**
(45) Date of publication and mention of the grant of the patent: **03.05.2017**
(21) Application number: 13839490.3
(22) Date of filing: 22.09.2013
(51) Int. Cl.: H04W 52/02, H04W 4/00, H04W 76/04, H04W 84/18

(54) **DATA TRANSMISSION METHOD AND DEVICE**
DATENÜBERTRAGUNGSVERFAHREN UND -VORRICHTUNG
PROCÉDÉ ET DISPOSITIF DE TRANSMISSION DE DONNÉES

(30) Priority: 20.09.2012 CN 201210351971
(43) Date of publication of application: 24.06.2015
(73) Proprietor: Huawei Technologies Co., Ltd., Longgang District Shenzhen, Guangdong 518129 (CN)
(72) Inventor: LIU, Pei, Shenzhen Guangdong 518129 (CN)
(74) Representative: Gill Jennings & Every LLP
(86) International application number: PCT/CN2013/083945
(87) International publication number: WO 2014/044216

(56) References cited:
- EP-A2- 1 594 262
- WO-A2-2009/024925
- CN-A- 101 978 748
- CN-A- 102 612 122
- CN-A- 102 612 122
- CN-A- 102 892 193
- US-A1- 2006 242 127
- US-A1- 2010 150 043

## Description

Embodiments of the present invention relate to the field of communications technologies, and in particular, to a data transmission method and device.

A wireless sensor network is formed by a large quantity of micro-sensor nodes deployed in a monitored area, and is a multi-hop self-organizing network formed in a wireless communications manner. Currently, the wireless sensor network has been widely applied. However, a sensor node is powered by a battery, and if energy of the battery is exhausted, the sensor node is out of action. Therefore, reducing energy consumption is an important technology to prolong a life cycle of the wireless sensor network.

In the prior art, a sensor node is in a woken-up state in an active period of a superframe, and may exchange data with a network node in this case, but in an inactive period of the superframe, the sensor node enters a dormant state, so that energy consumption is reduced.

In a process of implementing the embodiments of the present invention, it is found that in the prior art, when a sensor node needs to exchange, in an inactive period, data with a network node, the network node needs to wait until arrival of an active period of a next superframe, so as to exchange data with the sensor node, thereby increasing a data transmission delay.

US2010/150043, CN102612122, and WO2009/024925 all disclose transmission systems.

Embodiments of the present invention provide a data transmission method and device, which can achieve that a network node may perform data transmission with a destination sensor node when the destination sensor node is in an inactive period, without needing to wait for an active period of a next superframe, thereby reducing a data transmission delay and ensuring data transmission synchronization.

According to a first aspect, an embodiment of the present invention provides a data transmission method, comprising: determining, by a network node, that a destination sensor node on a personal area network (PAN) and of to-be-transmitted data is in an inactive period;
sending, by the network node, a wake-up message to the destination sensor node, wherein the wake-up message is used to trigger the destination sensor node to enter a woken-up state from a dormant state of the inactive period; receiving, by the network node, a response message that is from the destination sensor node and for the wake-up message; and performing, by the network node, data transmission with the destination sensor node according to the response message, wherein the wake-up message is a set quantity of wake-up pulses, and the sending, by the network node, a wake-up message to the destination sensor node comprises: broadcasting, by the network node, the wake-up pulses to each sensor node on the personal area network PAN that the network node belongs to, so that the destination sensor node determines, according to the wake-up pulses and a preset wake-up factor for the PAN to which it belongs, whether to enter the woken-up state from the dormant state, wherein sensor nodes on different PANs are corresponding to different wake-up factors.

With reference to the first aspect, in the data transmission method provided by the embodiment of the present invention, after the sending, by the network node, a wake-up message to the destination sensor node, and before the receiving, by the network node, a response message that is from the destination sensor node and for the wake-up message, the method further includes:
broadcasting, by the network node, a wake-up frame to each sensor node on the PAN, where the wake-up frame carries identifier information of the destination sensor node, so that the destination sensor node determines, according to the identifier information, to send the response message to the network node.

With reference to the first aspect, in the data transmission method provided by the embodiment of the present invention, the response message is a data request frame, and the data request frame is used to request to receive data; and the performing, by the network node, data transmission with the destination sensor node according to the response message includes: sending, by the network node, data to the destination sensor node according to the data request frame; or
the response message is an acknowledgement ACK frame, and the ACK frame is used to indicate that the destination sensor node enters the woken-up state from the dormant state; and the performing, by the network node, data transmission with the destination sensor node according to the response message includes: receiving, by the network node, data sent by the destination sensor node.

According to a second aspect, an embodiment of the present invention further provides a data transmission method, comprising: receiving, by a sensor node, a wake-up message sent by a network node, wherein the wake-up message is used to trigger the sensor node to enter a woken-up state from a dormant state of an inactive period; sending, by the sensor node, a response message that is for the wake-up message to the network node; and performing, by the sensor node, data transmission with the network node, wherein the wake-up message is a set quantity of wake-up pulses, and the receiving, by a sensor node, a wake-up message sent by a network node comprises: receiving, by the sensor node, the wake-up pulses broadcasted by the network node; and determining, by the sensor node according to the wake-up pulses and a preset wake-up factor, whether to enter the woken-up state from the dormant state, wherein sensor nodes on different PANs have different corresponding wake-up factors.

With reference to the second aspect, in the data transmission method provided by the embodiment of the present invention, after the receiving, by a sensor node, a wake-up message sent by a network node, and before the sending, by the sensor node, a response message that is for the wake-up message to the network node, the method further includes:
receiving, by the sensor node, a wake-up frame broadcasted by the network node, where the wake-up frame carries identifier information of a destination sensor node; and
if the sensor node enters the woken-up state from the dormant state, determining, by the sensor node according to the identifier information of the destination sensor node, whether to send the response message to the network node.

With reference to the second aspect, in the data transmission method provided by the embodiment of the present invention, the response message is a data request frame, and the data request frame is used to request to receive data; and the performing, by the sensor node, data transmission with the network node includes: receiving, by the sensor node, data sent by the network node according to the data request frame; or
the response message is an acknowledgement ACK frame, and the ACK frame is used to indicate that the destination sensor node enters the woken-up state from the dormant state; and the performing, by the sensor node, data transmission with the network node includes: sending, by the sensor node, data to the network node.

According to a third aspect, an embodiment of the present invention provides a network node, comprising: a determining module, configured to determine that a destination sensor node on a personal area network (PAN) and of to-be-transmitted data is in an inactive period; a sending module, configured to send a wake-up message to the destination sensor node, wherein the wake-up message is used to trigger the destination sensor node to enter a woken-up state from a dormant state of the inactive period; a receiving module, configured to receive a response message that is from the destination sensor node and for the wake-up message; and a transmitting module, configured to perform data transmission with the destination sensor node according to the response message, wherein the sending module is specifically configured to: when the wake-up message is a set quantity of wake-up pulses, broadcast the wake-up pulses to each sensor node on a personal area network PAN that the network node belongs to, so that the destination sensor node determines, according to the wake-up pulses and a preset wake-up factor for the PAN to which it belongs, whether to enter the woken-up state from the dormant state, wherein sensor nodes on different PANs correspond to different wake-up factors.

With reference to the third aspect, in the network node provided by the embodiment of the present invention, the sending module is further configured to broadcast a wake-up frame to each sensor node on the PAN, where the wake-up frame carries identifier information of the destination sensor node, so that the destination sensor node determines, according to the identifier information, to send the response message to the network node.

With reference to the third aspect, in the network node provided by the embodiment of the present invention, the transmitting module is specifically configured to: when the response message is a data request frame, and the data request frame is used to request to receive data, send data to the destination sensor node according to the data request frame; or
when the response message is an acknowledgement ACK frame, and the ACK frame is used to indicate that the destination sensor node enters the woken-up state from the dormant state, receive data sent by the destination sensor node.

According to a fourth aspect, an embodiment of the present invention provides a sensor node, comprising: a receiving module, configured to receive a wake-up message sent by a network node, wherein the wake-up message is used to trigger the sensor node to enter a woken-up state from a dormant state of an inactive period; a sending module, configured to send a response message that is for the wake-up message to the network node; and a transmitting module, configured to perform data transmission with the network node, wherein the receiving module is specifically configured to: when the wake-up message is a set quantity of wake-up pulses, receive the wake-up pulses broadcasted by the network node, and determine, according to the wake-up pulses and a preset wake-up factor, whether to enter the woken-up state from the dormant state, wherein sensor nodes on different PANs are corresponding to different wake-up factors.

With reference to the fourth aspect, in the sensor node provided by the embodiment of the present invention, the transmitting module is specifically configured to: when the response message is a data request frame, and the data request frame is used to request to receive data, receive data sent by the network node according to the data request frame; or
configured to: when the response message is an acknowledgement ACK frame, and the ACK frame is used to indicate that the destination sensor node enters the woken-up state from the dormant state, send data to the network node.

According to the data transmission method and apparatus that are provided by the embodiments of the present invention, a network node determines that a destination sensor node of to-be-transmitted data is in an inactive period, sends a wake-up message to the destination sensor node to wake the destination sensor node in a dormant state, then receives a response message, sent by the destination sensor node, of entering a woken-up state, and determines that the destination sensor node has been in the woken-up state; and at this time, the network node may perform data transmission with the destination sensor node, so that the network node may perform the data transmission with the destination sensor node when the destination sensor node is in the inactive period, without needing to wait for an active period of a next superframe, thereby reducing a data transmission delay and ensuring data transmission synchronization.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a flowchart of Embodiment 1 of a data transmission method according to the present invention;
FIG. 2 is a flowchart of Embodiment 2 of a data transmission method according to the present invention;
FIG. 3 is a flowchart of Embodiment 3 of a data transmission method according to the present invention;
FIG. 4 is a schematic structural diagram of Embodiment 1 of a network node according to the present invention;
FIG. 5 is a schematic structural diagram of Embodiment 1 of a sensor node according to the present invention;
FIG. 6 is a schematic structural diagram of Embodiment 1 of a data transmission system according to the present invention;
FIG. 7 is a schematic diagram of Embodiment 1 of a PAN including a network node and a sensor node of the present invention;
FIG. 8 is a schematic structural diagram of Embodiment 2 of a data transmission system according to the present invention;
FIG. 9 is a working principle diagram of a relay module in FIG. 8;
FIG. 10 is a schematic time diagram of wake-up pulses and wake-up frames;
FIG. 11 is a schematic structural diagram of a wake-up module in FIG. 8;
FIG. 12 is a flowchart of sending, by a network node in FIG. 7, data to a sensor node in FIG 7; and
FIG. 13 is a flowchart of receiving, by a network node in FIG. 7, data sent from a sensor node in FIG. 7.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by persons of ordinary skill in the art based on the embodiments of the present invention without creative efforts shall fall within the protection scope of the present invention.

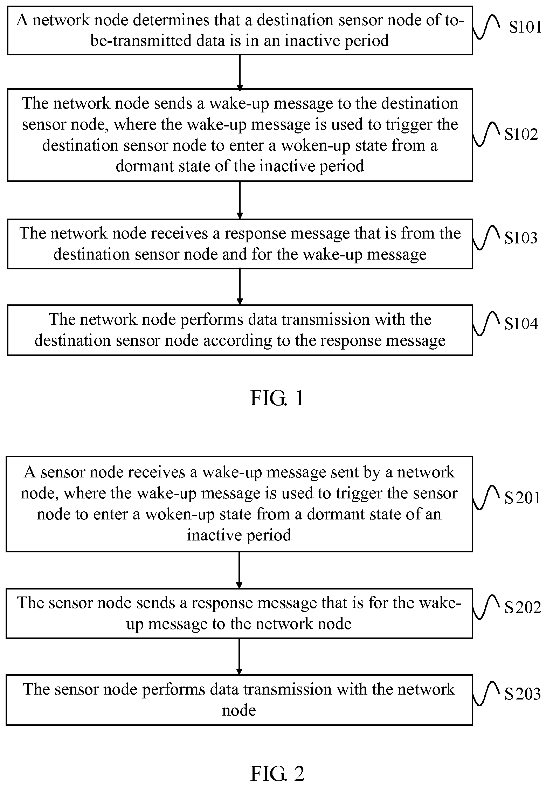

FIG. 1 is a flowchart of Embodiment 1 of a data transmission method according to the present invention. As shown in FIG. 1, the method of this embodiment may include:
S101: A network node determines that a destination sensor node of to-be-transmitted data is in an inactive period.

This embodiment of the present invention may be applicable to a plurality of sensor network implementation scenarios. For example, a sensor may be a meter, and the meter in a sensor network needs to regularly exchange data with a network node, so as to report data from meter reading.

When a sensor node is located on a PAN (Personal Area Network, personal area network) where the network node is used as a coordinator, the network node periodically broadcasts a beacon frame to the sensor node on the PAN by using duration of a superframe as a period. Persons of ordinary skill in the art may understand that the beacon frame is similar to that in the prior art, and no details are introduced herein in the present invention. The beacon frame includes information about the superframe. The superframe has an active period and an inactive period. When receiving the beacon frame, the sensor node may acquire the information about the superframe. When it is in the active period of the superframe, the sensor node is in a woken-up state, and is capable of performing data communication with the network node; when it is in the inactive period of the superframe, the sensor node is in a dormant state. When the active period and the inactive period that are indicated by the superframe end, the network node sends a beacon frame again, and the sensor node enters an active period and an inactive period that are of a next superframe. By analogy, the sensor node is periodically in the woken-up/dormant state.

Because the beacon frame is broadcasted to the sensor node by the network node, the network node may learn whether sensor nodes on the whole PAN are in the active period of the superframe or in the inactive period of the superframe. Therefore, when the network node needs to perform data transmission with a destination sensor node, if the network node determines that the destination sensor node of to-be-transmitted data is in the active period of the superframe, the network node may directly perform data transmission with the destination sensor node, and if the network node determines that the destination sensor node of to-be-transmitted data is in the inactive period of the superframe, it indicates that the destination sensor node is in the dormant state, and the data transmission cannot be directly performed. In this embodiment of the present invention, the network node may wake the destination sensor node in the dormant state.

S102. The network node sends a wake-up message to the destination sensor node, where the wake-up message is used to trigger the destination sensor node to enter a woken-up state from a dormant state of the inactive period.

When the network node determines that the destination sensor node of the to-be-transmitted data is in the inactive period of the superframe, the network node sends the wake-up message to the destination sensor node, where the wake-up message is used to trigger the destination sensor node to enter the woken-up state from the dormant state of the inactive period. As a feasible implementation manner, the network node may directly send the wake-up message to the destination sensor node to wake the destination sensor node. As another feasible implementation manner, the network node may send, by broadcasting, the wake-up message to all sensor nodes on the PAN on which the network node is located, and the destination sensor node receives the wake-up message, and then enters the woken-up state from the dormant state.

S103: The network node receives a response message that is from the destination sensor node and for the wake-up message.

When the destination sensor node receives the wake-up message sent by the network node, the destination sensor node enters the woken-up state from the dormant state of the inactive period of the superframe, and sends, to the network node, the response message of receiving the wake-up message and entering the woken-up state. The network node receives the response message that is from the destination sensor node and for the wake-up message, and may determine that the destination sensor node has entered the woken-up state.

S104: The network node performs data transmission with the destination sensor node according to the response message.

When the network node determines, according to the received response message, that the destination sensor node has been in the woken-up state, the network node may perform the data transmission with the destination sensor node. Specifically, the network node may send data to the destination sensor node, or the network node may receive data sent by the destination sensor node.

According to the data transmission method provided by Embodiment 1 of the present invention, a network node determines that a destination sensor node of to-be-transmitted data is in an inactive period, sends a wake-up message to the destination sensor node to wake the destination sensor node in a dormant state, then receives a response message, sent by the destination sensor node, of entering a woken-up state, and determines that the destination sensor node has been in the woken-up state; and at this time, the network node may perform data transmission with the destination sensor node, so that the network node may perform the data transmission with the destination sensor node when the destination sensor node is in the inactive period, without needing to wait for an active period of a next superframe, thereby reducing a data transmission delay and ensuring data transmission synchronization.

FIG. 2 is a flowchart of Embodiment 2 of a data transmission method according to the present invention. As shown in FIG. 2, the method of this embodiment may include:

S201: A sensor node receives a wake-up message sent by a network node, where the wake-up message is used to trigger the sensor node to enter a woken-up state from a dormant state of an inactive period.

When the network node needs to perform data transmission with any sensor node located on a same PAN as the network node, and determines that the sensor node is in the inactive period of a superframe, the network node sends the wake-up message to the sensor node of to-be-transmitted data, where the wake-up message is used to trigger the sensor node to enter the woken-up state from the dormant state of the inactive period. Therefore, the sensor node in the inactive period of the superframe receives the wake-up message sent by the network node, and may enter the woken-up state from the dormant state according to the wake-up message.

S202: The sensor node sends a response message that is for the wake-up message to the network node.

When the sensor node receives the wake-up message sent by the network node and is in the woken-up state, the sensor node sends, to the network node, the response message of receiving the wake-up message and entering the woken-up state, so that the network node learns, according to the response message, that the sensor node has been woken up and been in the woken-up state.

S203: The sensor node performs data transmission with the network node.

After the sensor node sends the response message to the network node to inform the network node that the sensor node has been in the woken-up state, the sensor node may perform the data transmission with the network node. Specifically, the sensor node may send data to the network node, or the sensor node may receive data sent by the network node.

According to the data transmission method provided by Embodiment 2 of the present invention, a sensor node receives a wake-up message sent by a network node, enters a woken-up state from a dormant state of an inactive period according to the wake-up message, and sends a response message that is for the wake-up message to the network node, so that the network node learns that the sensor node has entered the woken-up state; and at this time, the sensor node may perform data transmission with the network node, so that the network node may perform the data transmission with the sensor node when the sensor node is in the inactive period, without needing to wait for an active period of a next superframe, thereby reducing a data transmission delay and ensuring data transmission synchronization.

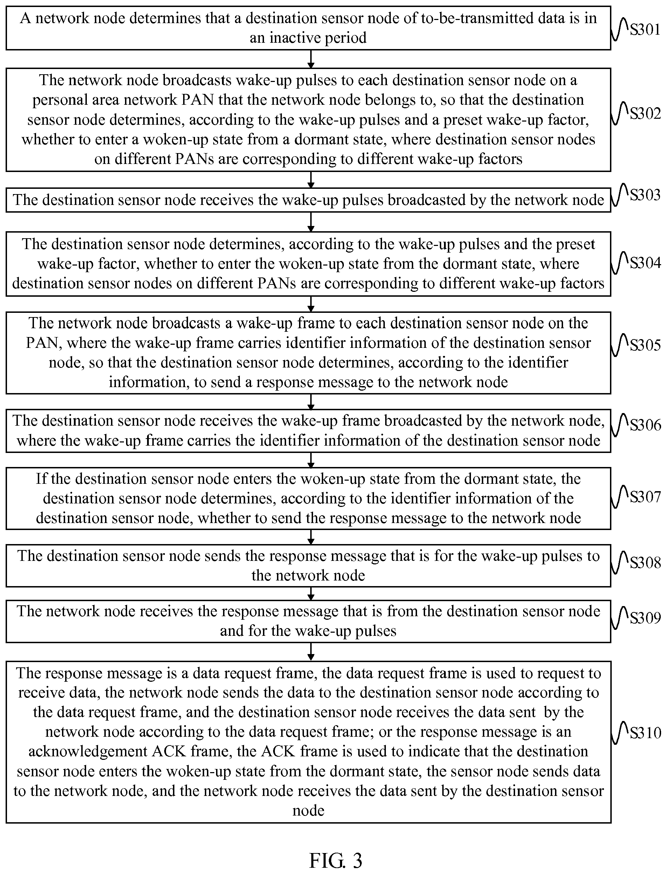

FIG. 3 is a flowchart of Embodiment 3 of a data transmission method according to the present invention. As shown in FIG. 3, the method of this embodiment may include:

S301: A network node determines that a destination sensor node of to-be-transmitted data is in an inactive period.

When the network node determines that the destination sensor node of the to-be-transmitted data is in the inactive period, the network node needs to send a wake-up message to the destination sensor node, so that the destination sensor node enters a woken-up state from a dormant state of the inactive period. In this embodiment, the wake-up message is a set quantity of wake-up pulses.

S302: The network node broadcasts wake-up pulses to each sensor node on a personal area network PAN that the network node belongs to, so that the destination sensor node determines, according to the wake-up pulses and a preset wake-up factor, whether to enter a woken-up state from a dormant state, where sensor nodes on different PANs are corresponding to different wake-up factors.

Optionally, the wake-up message sent by the network node to each sensor node may be the set quantity of wake-up pulses. In this embodiment, the network node may send, by broadcasting, the set quantity of wake-up pulses to each sensor node on the PAN that the network node belongs to, so that each sensor node determines, according to the wake-up pulses and the preset wake-up factor, whether to enter the woken-up state from the dormant state, and sensor nodes on different PANs are corresponding to different wake-up factors; therefore, when the network node sends the wake-up pulses, each sensor node on the PAN that the network node belongs to may be woken up. When PANs are established, a different wake-up factor may be allocated to each PAN, so as to avoid mistaken wake-up, where a wake-up factor allocating rule may be determined by the number of PANs within coverage of wireless communications. Considering a factor of a data transmission delay, a smaller wake-up factor is generally better, but no limitation is set herein in the present invention. Each sensor node may be informed of the wake-up factor in a manner in which the network node on the PAN periodically sends a beacon frame to the sensor node on the PAN.

In a specific implementation manner, the network node may make the preset quantity of sent wake-up pulses and the preset wake-up factor meet a preset matching relationship. For example, because the network node stores the wake-up factor of the PAN that the network node belongs to, the network node may make a preset quantity of wake-up pulses be a value obtained after the preset wake-up factor plus one. Because in this embodiment, when the network node sends, by broadcasting, the preset quantity of wake-up pulses to the sensor node on the PAN that the network node belongs to, and some sensor nodes on another PAN adjacent to the PAN that the network node belongs to are in signal coverage of the PAN that the network node belongs to, these sensor nodes on the another PAN also receive the wake-up pulses sent by the network node. When receiving a first wake-up pulse sent by the network node, the sensor node on the PAN that the network node belongs to and the sensor nodes on the another PAN all enter the woken-up state from the dormant state, and then the sensor node count the number of subsequently received wake-up pulses, and determines, by comparison, whether an obtained wake-up pulse count value is equal to the preset wake-up factor. If the obtained wake-up pulse count value is equal to the preset wake-up factor, each sensor node on the PAN that the network node belongs to maintains the woken-up state, and if the obtained wake-up pulse count value is not equal to the preset wake-up factor, , it indicates that the sensor node belongs to another PAN, and the sensor node enters the dormant state from the woken-up state.

S303: The sensor node receives the wake-up pulses broadcasted by the network node.

In this embodiment, the network node sends the preset quantity of wake-up pulses by broadcasting. Each sensor node on the PAN that the network node belongs to receives the preset quantity of wake-up pulses, and the sensor node that belongs to the another PAN, if in the signal coverage of the PAN that the network node belongs to, also receives the preset quantity of wake-up pulses.

S304: The sensor node determines, according to the wake-up pulses and the preset wake-up factor, whether to enter the woken-up state from the dormant state, where sensor nodes on different PANs are corresponding to different wake-up factors.

Because the preset quantity of wake-up pulses is the value obtained after the wake-up factor of the PAN that the network node belongs to plus one, all sensor nodes that receive the first wake-up pulse enter the woken-up state from the dormant state. All the sensor nodes that have entered the woken-up state receive the subsequent wake-up pulses, and count the number of these wake-up pulses, and then the sensor node determines, by comparison, whether the obtained count value is equal to the wake-up factor of the PAN that the network node belongs to. Because sensor nodes on different PANs are corresponding to different wake-up factors, if the obtained count value is equal to the wake-up factor of the PAN that the network node belongs to, it indicates that the sensor node is a sensor node on the PAN that the network node belongs to, and the sensor node maintains the woken-up state; and if the obtained count value is not equal to the wake-up factor of the PAN that the network node belongs to, it indicates that the sensor node is a sensor node on another PAN, and the sensor node enters the dormant state from the woken-up state.

S305: The network node broadcasts a wake-up frame to each sensor node on the PAN, where the wake-up frame carries identifier information of the destination sensor node, so that the destination sensor node determines, according to the identifier information, to send a response message to the network node.

In this embodiment, according to the preset quantity of wake-up pulses, each sensor node on the PAN that the network node belongs to enters the woken-up state. At this time, the network node sends the wake-up frame to each sensor node on the PAN by broadcasting. Because each sensor node on the PAN is different, and each sensor node has identifier information that identifies the sensor node itself and distinguishes the sensor node itself from another sensor node, the wake-up frame carries the identifier information of the destination sensor node with which the network node needs to perform the data transmission, so that each sensor node on the PAN that the network node belongs to determines, according to the identifier information, whether the network node needs to perform the data transmission with the sensor node itself. If the destination sensor node determines that the network node needs to perform the data transmission with the destination sensor node itself, the destination sensor node sends the response message to the network node. The identifier information may be address information and the like.

S306: The sensor node receives the wake-up frame broadcasted by the network node, where the wake-up frame carries the identifier information of the destination sensor node.

Each sensor node on the PAN to which the network node belongs to receives the wake-up frame sent by broadcasting by the network node. Because the wake-up frame carries the identifier information of the destination sensor node with which the network node needs to perform the data transmission, and each sensor node has the identifier information that identifies the sensor node itself and distinguishes the sensor node itself from another sensor node, each sensor node parses the identifier information in the wake-up frame, where the identifier information may be the address information and the like, and then determines whether the identifier information is the identifier information of the sensor node itself.

S307: If the sensor node enters the woken-up state from the dormant state, the sensor node determines, according to the identifier information of the destination sensor node, whether to send the response message to the network node.

If the sensor node determines that the identifier information in the wake-up frame is the identifier information of the sensor node itself, it indicates that the network node needs to perform the data transmission with the sensor node, and the sensor node maintains the woken-up state, and needs to send the response message to the network node, so as to inform the network node that the destination sensor node has been in the woken-up state, and S308 is executed. If the sensor node determines that the identifier information in the wake-up frame is not the identifier information of the sensor node itself, it indicates that the network node does not need to perform the data transmission with the sensor node, and then the sensor node enters the dormant state from the woken-up state, and sends no response message to the network node.

S308: The sensor node sends the response message that is for the wake-up pulses to the network node.

When the sensor node learns, according to the identifier information, that the network node needs to perform the data transmission with the sensor node, the sensor node sends the response message to the network node, and then may perform the data transmission with the network node.

S309: The network node receives the response message that is from the destination sensor node and for the wake-up pulses.

When receiving the response message sent by the destination sensor node, the network node learns that the sensor node has been in the woken-up state, and then may perform the data transmission with the sensor node.

S310: The response message is a data request frame, the data request frame is used to request to receive data, the network node sends the data to the destination sensor node according to the data request frame, and the destination sensor node receives the data sent by the network node according to the data request frame; or the response message is an acknowledgement ACK frame, the ACK frame is used to indicate that the destination sensor node enters the woken-up state from the dormant state, the destination sensor node sends data to the network node, and the network node receives the data sent by the destination sensor node.

For a data transmission case where the network node needs to send the data to the destination sensor node, when the response message sent by the destination sensor node to the network node is the data request frame, and the data request frame is used by the destination sensor node to request the data from the network node. The network node receives the data request frame and learns that the destination sensor node requests the data, and therefore the network node sends an acknowledgement frame to the destination sensor node to indicate that the network node has received the data request of the destination sensor node, then the network node sends the data to the destination sensor node, and the sensor node receives the data sent by the network node, so that the data transmission between the network node and the destination sensor node is implemented.

For a data transmission case where the destination sensor node needs to send the data to the network node, the response message sent by the destination sensor node to the network node is the acknowledgement ACK frame, and the ACK frame is used to indicate that the destination sensor node enters the woken-up state from the dormant state. Then, the destination sensor node sends data to the network node, and the network node receives the data sent by the destination sensor node, so that the data transmission between the network node and the destination sensor node is implemented.

It should be noted that when the data transmission is completed, the sensor node enters the dormant state from the woken-up state to reduce energy consumption, and waits, until arrival of an active period of a next superframe, to enter the woken-up state again, or if data transmission needs to be performed again in an inactive period of the superframe, the sensor node may be woken up again.

According to the data transmission method provided by Embodiment 3 of the present invention, a network node first determines that a destination sensor node of to-be-transmitted data is in an inactive period; the network node sends wake-up pulses to each sensor node on a PAN that the network node belongs to; each sensor node on the PAN that the network node belongs to enters a woken-up state from a dormant state according to a fact that the received wake-up pulses and a preset wake-up factor meet a preset matching relationship; the network node sends a wake-up frame to each sensor node on the PAN that the network node belongs to; the wake-up frame carries identifier information of the destination sensor node, so that the destination sensor node sends a response message to the network node after determining that the identifier information is identifier information of the destination sensor node itself; if the response message is a data request frame, the network node sends data to the destination sensor node, and the destination sensor node receives the data; and if the response message is an acknowledgement ACK frame, the destination sensor node sends data to the network node, and the network node receives the data, so that data transmission between the network node and the destination sensor node is implemented when the destination sensor node is in the inactive period. As a result, when the destination sensor node is in the inactive period, the network node may perform the data transmission with the destination sensor node without needing to wait for an active period of a next superframe, thereby reducing a data transmission delay and ensuring data transmission synchronization.

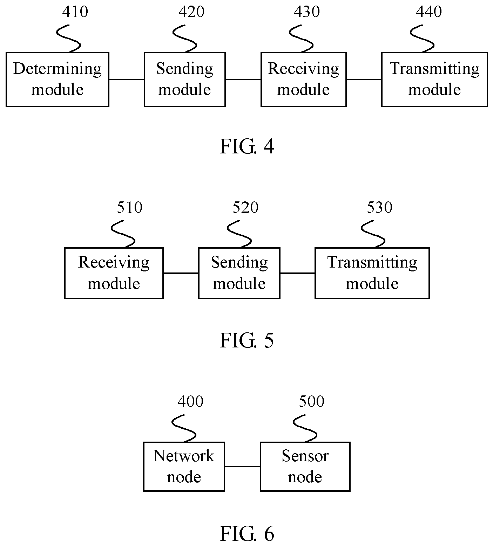

FIG. 4 is a schematic structural diagram of Embodiment 1 of a network node according to the present invention. As shown in FIG. 4, the network node of this embodiment may include: a determining module 410, a sending module 420, a receiving module 430, and a transmitting module 440. The determining module 410 is configured to determine that a destination sensor node of to-be-transmitted data is in an inactive period; the sending module 420 is configured to send a wake-up message to the destination sensor node, where the wake-up message is used to trigger the destination sensor node to enter a woken-up state from a dormant state of the inactive period; the receiving module 430 is configured to receive a response message that is from the destination sensor node and for the wake-up message; and the transmitting module 440 is configured to perform data transmission with the destination sensor node according to the response message.

The network node of this embodiment may be configured to execute the technical solution of Embodiment 1 of the data transmission method shown in FIG. 1, where an implementation principle of the network node is similar to that of the data transmission method, and no details are repeatedly described herein again.

According to the network node provided by Embodiment 1 of the present invention, a determining module determines that a destination sensor node of to-be-transmitted data is in an inactive period; a sending module sends a wake-up message to the destination sensor node to wake the destination sensor node in a dormant state; a receiving module receives a response message, sent by the destination sensor node, of entering a woken-up state, and determines that the destination sensor node has been in the woken-up state; and at this time, a transmitting module may perform data transmission with the destination sensor node, so that the network node may perform the data transmission with the destination sensor node when the destination sensor node is in the inactive period, without needing to wait for an active period of a next superframe, thereby reducing a data transmission delay and ensuring data transmission synchronization.

In Embodiment 2 of the network node of the present invention, the network node of this embodiment is based on the structure of the network node shown in FIG. 4. The foregoing sending module 420 may be specifically configured to: when the wake-up message is a set quantity of wake-up pulses, broadcast the wake-up pulses to each sensor node on a personal area network PAN that the network node belongs to, so that the destination sensor node determines, according to the wake-up pulses and a preset wake-up factor, whether to enter the woken-up state from the dormant state, where sensor nodes on different PANs are corresponding to different wake-up factors.

Further, the sending module 420 may be further configured to broadcast a wake-up frame to each sensor node on the PAN, where the wake-up frame carries identifier information of the destination sensor node, so that the destination sensor node determines, according to the identifier information, to send the response message to the network node. The foregoing transmitting module 440 may be specifically configured to: when the response message is a data request frame, and the data request frame is used to request to receive data, send the data to the destination sensor node according to the data request frame; or when the response message is an acknowledgement ACK frame, and the ACK frame is used to indicate that the destination sensor node enters the woken-up state from the dormant state into, receive data sent by the destination sensor node.

The network node of this embodiment may be configured to execute the technical solution executed by the network node in Embodiment 3 of the data transmission method shown in FIG. 3, where an implementation principle of the network node is similar to that of the data transmission method, and no details are repeatedly described herein again.

According to the network node provided by Embodiment 2 of the present invention, a determining module determines that a destination sensor node of to-be-transmitted data is in an inactive period; a sending module sends a preset quantity of wake-up pulses to the destination sensor node, so that each sensor node on a PAN that the network node belongs to enters a woken-up state from a dormant state according to a fact that the wake-up pulses and a preset wake-up factor meet a preset matching relationship, and the sending module sends a wake-up frame to each sensor node, so that the destination sensor node sends a response message to the network node according to identifier information in the wake-up frame; a receiving module receives the response message; if the response message is a data request frame, a transmitting module sends data to the destination sensor node, and if the response message is an acknowledgement ACK frame, the transmitting module receives data sent by the destination sensor node, so that data transmission between the network node and the destination sensor node is implemented when the destination sensor node is in the inactive period. As a result, when the destination sensor node is in the inactive period, the network node may perform the data transmission with the destination sensor node without needing to wait for an active period of a next superframe, thereby reducing a data transmission delay and ensuring data transmission synchronization.

FIG. 5 is a schematic structural diagram of Embodiment 1 of a sensor node according to the present invention. As shown in FIG. 5, the sensor node of this embodiment may include: a receiving module 510, a sending module 520, and a transmitting module 530. The receiving module 510 is configured to receive a wake-up message sent by a network node, where the wake-up message is used to trigger the sensor node enter a woken-up state from a dormant state of an inactive period; the sending module 520 is configured to send a response message that is for the wake-up message to the network node; and the transmitting module 530 is configured to perform data transmission with the network node.

The sensor node of this embodiment may be configured to execute the technical solution of Embodiment 2 of the data transmission method shown in FIG. 2, where an implementation principle of the sensor node is similar to that of the data transmission method, and no details are repeatedly described herein again.

According to the sensor node provided by Embodiment 1 of the present invention, a receiving module receives a wake-up message sent by a network node, and enters a woken-up state from a dormant state of an inactive period according to the wake-up message; a sending module sends a response message that is for the wake-up message to the network node, so that the network node learns that the sensor node has entered the woken-up state; and at this time, a transmitting module may perform data transmission with the network node, so that the network node may perform the data transmission with the sensor node when the sensor node is in the inactive period, without needing to wait for an active period of a next superframe, thereby reducing a data transmission delay and ensuring data transmission synchronization.

In Embodiment 2 of the sensor node of the present invention, the sensor node of this embodiment is based on the structure of the sensor node shown in FIG. 5. The foregoing receiving module 510 may be specifically configured to: when the wake-up message is a set quantity of wake-up pulses, receive the wake-up pulses broadcasted by the network node, where it is determine, according to the wake-up pulses and a preset wake-up factor, whether to enter the woken-up state from the dormant state, and sensor nodes on different PANs are corresponding to different wake-up factors.

Further, the receiving module 510 may be further configured to receive a wake-up frame broadcasted by the network node, where the wake-up frame carries identifier information of a destination sensor node, and if the sensor node enters the woken-up state from the dormant state, it is determined, according to the identifier information of the destination sensor node, whether to enable the sending module. The foregoing transmitting module 530 may be specifically configured to: when the response message is a data request frame, and the data request frame is used to request to receive data, receive the data sent by the network node according to the data request frame; or when the response message is an acknowledgement ACK frame, and the ACK frame is used to indicate that the destination sensor node enters the woken-up state from the dormant state, send data to the network node.

The sensor node of this embodiment may be configured to execute the technical solution executed by the sensor node in Embodiment 3 of the data transmission method shown in FIG. 3, where an implementation principle of the sensor node is similar to that of the data transmission method, and no details are repeatedly described herein again.

According to the sensor node provided by Embodiment 2 of the present invention, a receiving module receives a preset quantity of wake-up pulses sent by a network node, where each sensor node on a PAN that the network node belongs to enters a woken-up state from a dormant state of an inactive period according to a fact that the wake-up pulses and a preset wake-up factor meet a preset matching relationship, and the receiving module then receives a wake-up frame sent by the network node; when a destination sensor node learns that identifier information in the wake-up frame is identifier information of the destination sensor node itself, a sending module sends a response message to the network node; if the response message is a data request frame, a transmitting module receives data sent by the network node, and if the response message is an acknowledgement ACK frame, the transmitting module sends data to the network node, so that data transmission between the network node and the destination sensor node is implemented when the destination sensor node is in the inactive period. As a result, when the destination sensor node is in the inactive period, the network node may perform the data transmission with the destination sensor node without needing to wait for an active period of a next superframe, thereby reducing a data transmission delay and ensuring data transmission synchronization.

FIG. 6 is a schematic structural diagram of Embodiment 1 of a data transmission system according to the present invention. As shown in FIG. 6, the system of this embodiment includes: a network node 400 and a sensor node 500. The network node 400 may use the structure of the network node in Embodiment 1 or Embodiment 2, and correspondingly, may execute the technical solution executed by the network node in the embodiment of the data transmission method shown in FIG. 1 or FIG. 3, and an implementation manner and a technical effect of the network node 400 are similar, and no details are repeatedly described herein again; and the sensor node 500 may use the structure of the sensor node in Embodiment 1 or Embodiment 2, and correspondingly, may execute the technical solution executed by the sensor node in the embodiment of the data transmission method shown in FIG. 2 or FIG. 3, and an implementation manner and a technical effect of the sensor node 500 are similar, and no details are repeatedly described herein again.

It should be noted that the network node provided by each embodiment of the present invention may be used as a coordinator of a PAN. As a first implementable manner, the network node may be disposed in a gateway device; as a second implementable manner, the network node may be disposed in a concentrator; and as a third implementable manner, the network node may be disposed in a collector.

The foregoing methods shown by Embodiment 1 to Embodiment 3 of the data transmission method of the present invention may be applied in a household micropower wireless meter reading system, where the wireless meter reading system includes a sensor node and a network node. The data transmission system shown in FIG. 6 of the present invention is distributed at a network node and each sensor node that are on a PAN corresponding to the wireless meter reading system. The network node on the PAN may include the network node shown in Embodiment 1 or Embodiment 2 of the network node of the present invention, and the sensor node on the PAN may include the sensor node shown in Embodiment 1 or Embodiment 2 of the sensor node of the present invention. Because in the wireless meter reading system, a time interval of meter reading is set to once per day, once per week, or even once per month, a length of an inactive period of a superframe is much greater than a length of an active period, which causes a data transmission delay between the network node and the sensor node to increase. Therefore, a problem of a data transmission delay existing in the wireless meter reading system may be solved by using the data transmission method and device that are provided by the embodiments of the present invention. The following introduces application of the data transmission method and device, which are provided by the present invention, in the wireless meter reading system.

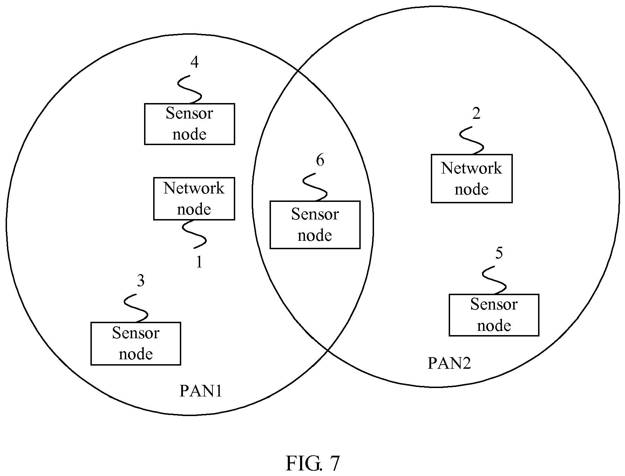

FIG. 7 is a schematic diagram of Embodiment 1 of a PAN including a network node and a sensor node of the present invention. As shown in FIG. 7, this embodiment only shows a schematic diagram of a PAN1 and a PAN2 that are two adjacent PANs, and on each PAN, only two sensor nodes are shown, where a network node 1, a sensor node 3, and a sensor node 4 belong to the PAN1, and a network node 2, a sensor node 5, and a sensor node 6 belong to the PAN2, but the sensor node 6 is in signal coverage of the PAN1. When the PANs are formed, a user sets a different wake-up factor for each PAN, where the wake-up factor is sent, in a manner in which the network node on each PAN periodically sends a beacon frame, to the sensor node on the PAN that the network node belongs to. It is assumed that the wake-up factor of the PAN1 is three. When the user sends, to the network node 1 on the PAN1, a search command of searching for the sensor node 3, the network node 1 learns, according to the search command, that data transmission needs to be performed with the sensor node 3. The network node 1 first determines whether each sensor node on the PAN1 that the network node 1 belongs to is in an active period of a superframe or in an inactive period of the superframe. When each sensor node on the PAN1 that the network node 1 belongs to is in the active period of the superframe, the network node 1 may directly perform the data transmission with the sensor node 3; and when each sensor node on the PAN that the network node 1 belongs to is in the inactive period of the superframe, the network node 1 cannot directly perform the data transmission with the sensor node 3, and the network node 1 needs to wake the sensor node 3. The following introduces a process in which the network node 1 wakes the sensor node 3 and performs the data transmission.

It should be noted that in the foregoing methods shown by Embodiment 1 to Embodiment 3 of the data transmission method of the present invention, the sensor node and the network node may execute the data transmission method by separately using software disposed on the sensor node and the network node, or the sensor node and the network node may execute the data transmission method by separately using a hardware circuit. In the following embodiment, a feasible implementation manner of the hardware circuit of the sensor node and the network node is provided.

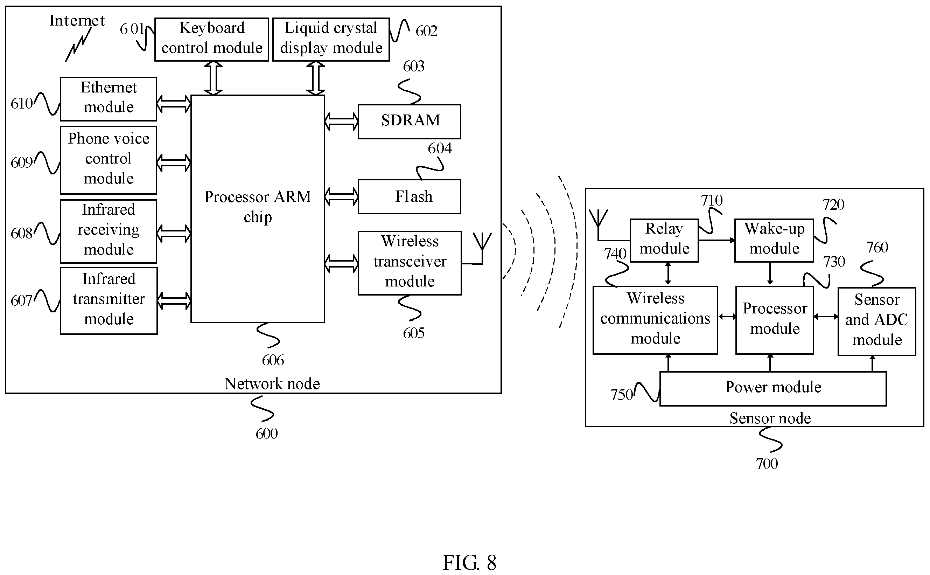

FIG. 8 is a schematic structural diagram of Embodiment 2 of a data transmission system according to the present invention. As shown in FIG. 8, the data transmission system of this embodiment includes a network node 600 and a sensor node 700. The network node 600 includes a keyboard control module 601, a liquid crystal display module 602, an SDRAM (Synchronous Dynamic Random Access Memory, synchronous dynamic random access memory) 603, a Flash 604, a wireless transceiver module 605, a processor ARM chip 606, an infrared transmitter module 607, an infrared receiving module 608, a phone voice control module 609, and an Ethernet (Ethernet) module 610; and the sensor node 700 includes a relay module 710, a wake-up module 720, a processor module 730, a wireless communications module 740, a power module 750, a sensor and ADC (Analog-to-Digital Converter, analog-to-digital converter) module 760. In the network node provided by this embodiment of the present invention, the foregoing determining module 410 includes the processor ARM chip 606, the foregoing sending module 420 includes the wireless transceiver module 605, the foregoing receiving module 430 includes the wireless transceiver module 605, and the foregoing transmitting module 440 includes the wireless transceiver module 605; and in the sensor node provided by this embodiment of the present invention, the foregoing receiving module 510 includes the relay module 710, the wake-up module 720, the processor module 730, and the wireless communications module 740, the foregoing sending module 520 includes the wireless communications module 740, and the foregoing transmitting module 530 includes the wireless communications module 740. In this embodiment, structures of the network node 1 and the network node 2 are the structure of the network node 600 shown in FIG. 8; and structures of the sensor node 3, the sensor node 4, the sensor node 5, and the sensor node 6 are the structure of the sensor node 700 shown in FIG. 8.

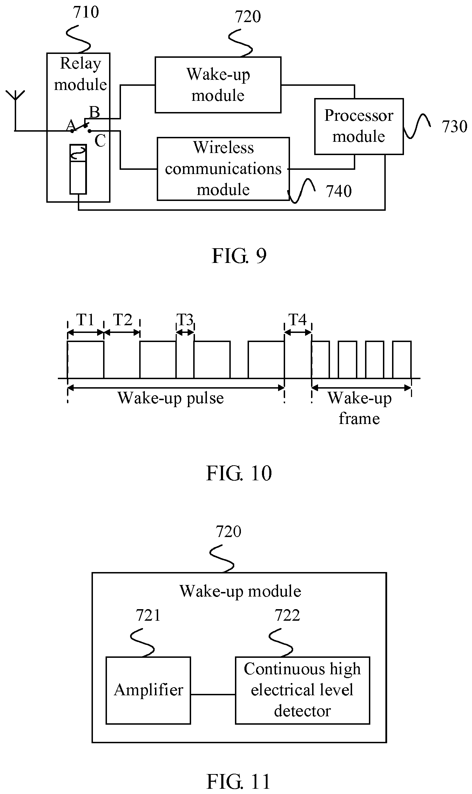

FIG. 9 is a working principle diagram of the relay module in FIG. 8. As shown in FIG. 9, the relay module 710 is mainly configured to switch an antenna between a wake-up device and a wireless transceiver. When a sensor node is in a dormant state, a relay is in a normally enabled state, and A is connected to B, that is, the antenna is connected to the wake-up module 720 by the relay module 710. When the sensor node is in a woken-up state, the relay module 710 is in a normally disabled state, that is, A is connected to C, that is, the antenna is connected to the wireless communications module 740 by the relay module. Only one case where the relay module 710 is connected to the wake-up module 720 is shown in FIG. 9. FIG. 10 is a schematic time diagram of wake-up pulses and wake-up frames. As shown in FIG. 10, when the network node 1 determines that each sensor node on the PAN1 that the network node 1 belongs to is in an inactive period of a superframe, it is assumed that the wake-up factor of the PAN1 is three, and the network node learns that 1+3 wake-up pulses need to be sent, the wireless transceiver module 605 of the network node 1 sends out a first wake-up pulse with duration of T1, after a time interval of T2, sends out three wake-up pulses, where a time interval among the subsequent wake-up pulses is T3, and after a time interval of T4 following completion of sending of all the four wake-up pulses, sends out a wake-up frame.

FIG. 11 is a schematic structural diagram of the wake-up module in FIG. 8. As shown in FIG. 11, the wake-up module 720 includes an amplifier 721 and a continuous high electrical level detector 722. Therefore, the wake-up module 720 has functions such as amplifying and high electrical level detecting. The wake-up modules 720 of the sensor node 3, the sensor node 4, and the sensor node 6 that are in the signal coverage of the PAN1 all receive, by using the antennas and the relay modules 710, the first wake-up pulse sent by the network node 1. The wake-up pulse is weak, so that the received wake-up pulse needs to pass through the amplifier 721 in the wake-up module 720 to undergo low noise signal amplification, which makes the wake-up pulse be of a high electrical level, and then pass through the continuous high electrical level detector 722, where the continuous high electrical level detector 722 is a continuous high electrical level detector including an RC (resistance-capacitance) oscillator. If it is detected that time of duration of the first wake-up pulse is greater than preset time, the wake-up module 720 sends a dormancy-interrupt signal to the processor module 730. When the processor module 730 receives the dormancy-interrupt signal, the processor module 730 enters a woken-up state from a dormant state, then enables a wake-up pulse counting function, and records the number of subsequent wake-up pulses. The preset time is determined by numerical values of resistance R and capacitance C that are of the continuous high electrical level detector. It is assumed that the preset time is 5ms, and the duration of the first wake-up pulse should be greater than or equal to 5ms.

Because the time interval between the first wake-up pulse and the subsequent three wake-up pulses is T2, where T2 is determined by time required by the processor module 730 receiving the dormancy-interrupt signal to enter the woken-up state, the wake-up module 720 sends the subsequent wake-up pulses to the processor module 730 after receiving the subsequent wake-up pulses, and the processor module 730 counts the number of received subsequent wake-up pulses. Because the time interval among the subsequent wake-up pulses is T3, where T3 is determined by duration of counting the wake-up pulse by the wake-up device, count values obtained by the processor modules 730 of the sensor node 3, the sensor node 4, and the sensor node 6 are all three, and then the processor module 730 of each sensor node determines whether the count value is equal to the wake-up factor of the PAN that the sensor node belongs to. Because the wake-up factor of the PAN that the sensor node 6 belongs to is not three, the processor module 730 of the sensor node 6 enters the dormant state from the woken-up state, that is, the sensor node 6 enters the dormant state again; because the wake-up factor of the PAN that the sensor node 3 and the sensor node 4 belong to is three, the processor modules 730 of the sensor node 3 and the sensor node 4 separately send an enable message to the relay modules 710 and wireless communications modules 740 of the sensor node 3 and the sensor node 4.

The wireless communications modules 740 of the sensor node 3 and the sensor node 4 automatically enter a working state according to the received enable messages, and therefore wireless data communication may be implemented. The relay module 710 enters a power supply state according to the received enable message, and a state in which A is connected to B switches to a state in which A is connected to C, that is, the relay module 710 switches to be connected to the wireless communications module 740. The time interval between the last subsequent wake-up pulse and the wake-up frame is T4, where T4 is determined by both time required by the wireless communications module 740 to enter the working state and time required by the relay module 710 to break connection to the wake-up module 720 to switch to be connected to the wireless communications module 740. The network node 1 needs to perform the data transmission with the sensor node 3, so that the wake-up frame includes identifier information of the sensor node 3, time slot information, and the like. In this embodiment, the identifier information is address information of the sensor node 3, and the time slot information specifies time of performing the data transmission by the network node and the sensor node. The wireless communications modules 740 of the sensor node 3 and the sensor node 4 receive the wake-up frame by using the antennas and the relay modules 710, then parse the wake-up frame, and send data that is obtained by the parsing to the processor modules 730. The processor modules 730 acquire the address information according to the data that is obtained by the parsing, and determine whether the address information is address information of the sensor nodes.

The processor module 730 of the sensor node 4 may determine that the address information is not address information of the sensor node, and therefore the processor module 730 of the sensor node 4 sends a disable message separately to the wireless communications module 740 and the relay module 710. The wireless communications module 740 automatically enters a disabled state according to the received disable message. The relay module 710 enters a power-off state according to the received disable message; therefore the state in which A is connected to C switches to the state in which A is connected to B, the relay module 710 switches to be connected to the wake-up module 720, and then the processor module 730 enters the dormant state from the woken-up state, that is, the sensor node 4 enters the dormant state again.

The address information is the address information of the sensor node 3, so that the processor module 730 of the sensor node 3 may determine that the address information is the address information of the sensor node, and therefore the wireless communications module 740 of the sensor node 3 sends a response message to the network node 1. The network node 1 receives the response message sent by the sensor node 3. Finally, the network node 1 and the sensor node 3 may implement the data transmission in the inactive period of the superframe, thereby reducing a data transmission delay in household micropower wireless meter reading system.

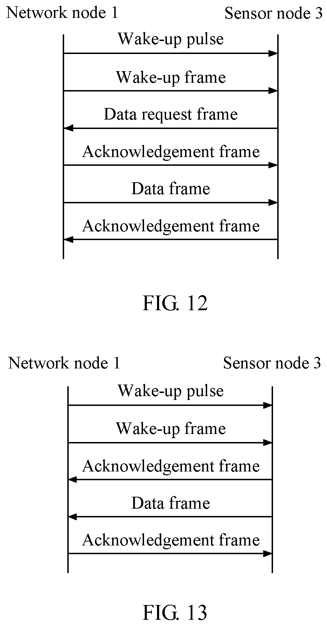

FIG. 12 is a flowchart of sending, by a network node in FIG. 7, data to a sensor node in FIG 7. As shown in FIG. 12, for a case where the network node 1 needs to send data to the sensor node 3, the network node 1 sends wake-up pulses to the sensor node 3, and then sends a wake-up frame to the sensor node 3. The sensor node 3 sends a response message to the network node 1 according to the received wake-up pulses and wake-up frame, where the response message is a data request frame. After receiving the data request frame, the network node 1 sends an acknowledgement frame to the sensor node 3 to indicate that the network node 1 has received a data request command, and then sends a data frame to the sensor node 3 according to a time slot list in the wake-up frame. After receiving the data frame successfully, the sensor node sends an acknowledgement frame to the network node 1, so that data transmission is ultimately completed.

FIG. 13 is a flowchart of receiving, by a network node in FIG. 7, data sent from a sensor node in FIG. 7. As shown in FIG. 13, for a case where the sensor node 3 is required to send data to the network node 1, the network node 1 sends wake-up pulses to the sensor node 3, and then sends a wake-up frame to the sensor node 3. The sensor node 3 sends a response message to the network node 1 according to the received wake-up pulses and wake-up frame, where the response message is an acknowledgement frame. After receiving the acknowledgement frame, the network node 1 may determine that the sensor node 3 has been woken up. Then, the sensor node 3 sends a data frame to the network node 1 according to time slot information in the wake-up frame. After receiving the data frame successfully, the network node 1 sends an acknowledgement frame to the sensor node 3, so that data transmission is ultimately completed.

When the data transmission between the network node 1 and the sensor node 3 is completed, the processor module 730 of the sensor node 3 sends a disable message separately to the wireless communications module 740 and the relay module 710. The wireless communications module 740 automatically enters the disabled state according to the received disable message, and the relay module 710 enters the power-off state according to the received disable message; therefore the state in which A is connected to C switches to the state in which A is connected to B, the relay module 710 switches to be connected to the wake-up module 720, and then the processor module 730 enters the woken-up state from the dormant state into, that is, the sensor node 3 enters the dormant state from the woken-up state into, so as to reduce energy consumption of the sensor node 3.

Persons of ordinary skill in the art may understand that all or a part of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disc, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A data transmission method, comprising:
determining, by a network node (400), that a destination sensor node (500) on a personal area network (PAN) and of to-be-transmitted data is in an inactive period;
sending, by the network node, a wake-up message to the destination sensor node, wherein the wake-up message is used to trigger the destination sensor node to enter a woken-up state from a dormant state of the inactive period;
receiving, by the network node, a response message that is from the destination sensor node and for the wake-up message; and
performing, by the network node, data transmission with the destination sensor node according to the response message, wherein the wake-up message is a set quantity of wake-up pulses, and the sending, by the network node, a wake-up message to the destination sensor node comprises:
broadcasting, by the network node, the wake-up pulses to each sensor node on the personal area network PAN that the network node belongs to, so that the destination sensor node determines, according to the wake-up pulses and a preset wake-up factor for the PAN to which it belongs, whether to enter the woken-up state from the dormant state, wherein sensor nodes on different PANs are corresponding to different wake-up factors.

2. The method according to claim 1, after the sending, by the network node (400), a wake-up message to the destination sensor node (500), and before the receiving, by the network node, a response message that is from the destination sensor node and for the wake-up message, further comprising:
broadcasting, by the network node, a wake-up frame to each sensor node on the PAN, wherein the wake-up frame carries identifier information of the destination sensor node, so that the destination sensor node determines, according to the identifier information, to send the response message to the network node.

3. The method according to any one of claims 1 to 2, wherein the response message is a data request frame, and the data request frame is used to request to receive data; and the performing, by the network node (400), data transmission with the destination sensor node (500) according to the response message comprises: sending, by the network node, data to the destination sensor node according to the data request frame; or
the response message is an acknowledgement ACK frame, and the ACK frame is used to indicate that the destination sensor node enters the woken-up state from the dormant state; and the performing, by the network node, data transmission with the destination sensor node according to the response message comprises: receiving, by the network node, data sent by the destination sensor node.

4. A data transmission method, comprising:
receiving, by a sensor node (500), a wake-up message sent by a network node (400), wherein the wake-up message is used to trigger the sensor node to enter a woken-up state from a dormant state of an inactive period;
sending, by the sensor node, a response message that is for the wake-up message to the network node; and
performing, by the sensor node, data transmission with the network node, wherein the wake-up message is a set quantity of wake-up pulses, and the receiving, by a sensor node, a wake-up message sent by a network node comprises:
receiving, by the sensor node, the wake-up pulses broadcasted by the network node; and
determining, by the sensor node according to the wake-up pulses and a preset wake-up factor, whether to enter the woken-up state from the dormant state, wherein sensor nodes on different PANs have different corresponding wake-up factors.

5. The method according to claim 4, after the receiving, by a sensor node (500), a wake-up message sent by a network node (400), and before the sending, by the sensor node, a response message that is for the wake-up message to the network node, further comprising:
receiving, by the sensor node, a wake-up frame broadcasted by the network node, wherein the wake-up frame carries identifier information of a destination sensor node; and
if the sensor node enters the woken-up state from the dormant state, determining, by the sensor node according to the identifier information of the destination sensor node, whether to send the response message to the network node.

6. The method according to any one of claims 4 or 5, wherein the response message is a data request frame, and the data request frame is used to request to receive data; and the performing, by the sensor node (500), data transmission with the network node (400) comprises: receiving, by the sensor node, data sent by the network node according to the data request frame; or
the response message is an acknowledgement ACK frame, and the ACK frame is used to indicate that the destination sensor node enters the woken-up state from the dormant state; and the performing, by the sensor node, data transmission with the network node comprises: sending, by the sensor node, data to the network node.

7. A network node (400), comprising:
a determining module (410), configured to determine that a destination sensor node (500) on a personal area network (PAN) and of to-be-transmitted data is in an inactive period;
a sending module (420), configured to send a wake-up message to the destination sensor node, wherein the wake-up message is used to trigger the destination sensor node to enter a woken-up state from a dormant state of the inactive period;
a receiving module (430), configured to receive a response message that is from the destination sensor node and for the wake-up message; and
a transmitting module (440), configured to perform data transmission with the destination sensor node according to the response message, wherein the sending module is specifically configured to: when the wake-up message is a set quantity of wake-up pulses, broadcast the wake-up pulses to each sensor node on a personal area network PAN that the network node belongs to, so that the destination sensor node determines, according to the wake-up pulses and a preset wake-up factor for the PAN to which it belongs, whether to enter the woken-up state from the dormant state, wherein sensor nodes on different PANs correspond to different wake-up factors.

8. The network node (400) according to claim 7, wherein the sending module (420) is further configured to broadcast a wake-up frame to each sensor node (500) on the PAN, wherein the wake-up frame carries identifier information of the destination sensor node, so that the destination sensor node determines, according to the identifier information, to send the response message to the network node.

9. The network node (400) according to any one of claims 7 or 8, wherein
the transmitting module (440) is specifically configured to: when the response message is a data request frame, and the data request frame is used to request to receive data, send data to the destination sensor node (500) according to the data request frame; or
when the response message is an acknowledgement ACK frame, and the ACK frame is used to indicate that the destination sensor node enters the woken-up state from the dormant state, receive data sent by the destination sensor node.

10. A sensor node (500), comprising:
a receiving module (510), configured to receive a wake-up message sent by a network node (400), wherein the wake-up message is used to trigger the sensor node to enter a woken-up state from a dormant state of an inactive period;
a sending module (520), configured to send a response message that is for the wake-up message to the network node; and
a transmitting module (530), configured to perform data transmission with the network node, wherein the receiving module is specifically configured to: when the wake-up message is a set quantity of wake-up pulses, receive the wake-up pulses broadcasted by the network node, and determine, according to the wake-up pulses and a preset wake-up factor, whether to enter the woken-up state from the dormant state, wherein sensor nodes on different PANs are corresponding to different wake-up factors.

11. The sensor node (500) according to claim 10, wherein the receiving module (510) is further configured to: receive a wake-up frame broadcasted by the network node (400), wherein the wake-up frame carries identifier information of a destination sensor node, and if the sensor node enters the woken-up state from the dormant state, determine, according to the identifier information of the destination sensor node, whether to enable the sending module (520).

12. The sensor node (500) according to any one of claims 10 or 11, wherein the transmitting module (530) is specifically configured to: when the response message is a data request frame, and the data request frame is used to request to receive data, receive data sent by the network node (400) according to the data request frame; or
configured to: when the response message is an acknowledgement ACK frame, and the ACK frame is used to indicate that the destination sensor node enters the woken-up state from the dormant state, send data to the network node.

## Patentansprüche

1. Datenübertragungsverfahren, umfassend:
Bestimmen, durch einen Netzwerkknoten (400), dass ein Bestimmungssensorknoten (500) in einem persönlichen Netzwerk (PAN) und von zu übertragenden Daten in einer inaktiven Periode ist;
Senden, durch den Netzwerkknoten, einer Wecknachricht an den Bestimmungssensorknoten, wobei die Wecknachricht verwendet wird, auszulösen, dass der Bestimmungssensorknoten aus einem Ruhezustand der inaktiven Periode in einen geweckten Zustand eintritt;
Empfangen, durch den Netzwerkknoten, einer Antwortnachricht, die von dem Bestimmungssensorknoten und für die Wecknachricht ist; und
Durchführen, durch den Netzwerkknoten, von Datenübertragung mit dem Bestimmungssensorknoten gemäß der Antwortnachricht, wobei die Wecknachricht eine eingestellte Menge von Weckimpulsen ist und das Senden, durch den Netzwerkknoten, einer Wecknachricht an den Bestimmungssensorknoten umfasst:
Rundsenden, durch den Netzwerkknoten, der Weckimpulse an jeden Sensorknoten in dem persönlichen Netzwerk PAN, zu dem der Netzwerkknoten gehört, so dass der Bestimmungssensorknoten bestimmt, gemäß den Weckimpulsen und einem im Voraus eingestellten Weckfaktor für das PAN, zu dem er gehört, ob aus dem Ruhezustand in den geweckten Zustand einzutreten ist, wobei Sensorknoten in verschiedenen PANs mit verschiedenen Weckfaktoren korrespondieren.

2. Verfahren nach Anspruch 1, nach dem Senden, durch den Netzwerkknoten (400), einer Wecknachricht an den Bestimmungssensorknoten (500) und vor dem Empfangen, durch den Netzwerkknoten, einer Antwortnachricht, die von dem Bestimmungssensorknoten und für die Wecknachricht ist, ferner umfassend:
Rundsenden, durch den Netzwerkknoten, eines Weckrahmens an jeden Sensorknoten in dem PAN, wobei der Weckrahmen Kennungsinformationen des Bestimmungssensorknotens trägt, so dass der Bestimmungssensorknoten gemäß den Kennungsinformationen bestimmt, die Antwortnachricht an den Netzwerkknoten zu senden.

3. Verfahren nach einem der Ansprüche 1 bis 2, wobei die Antwortnachricht ein Datenanforderungsrahmen ist und der Datenanforderungsrahmen verwendet wird, den Empfang von Daten anzufordern; und das Durchführen, durch den Netzwerkknoten (400), von Datenübertragung mit dem Bestimmungssensorknoten (500) gemäß der Antwortnachricht umfasst: Senden, durch den Netzwerkknoten, von Daten an den Bestimmungssensorknoten gemäß dem Datenanforderungsrahmen; oder
die Antwortnachricht ein Bestätigungs- bzw. ACK-Rahmen ist und der ACK-Rahmen verwendet wird, anzugeben, dass der Bestimmungssensorknoten aus dem Ruhezustand in den geweckten Zustand eintritt; und das Durchführen, durch den Netzwerkknoten, von Datenübertragung mit dem Bestimmungssensorknoten gemäß der Antwortnachricht umfasst: Empfangen, durch den Netzwerkknoten, von Daten, die von dem Bestimmungssensorknoten gesandt wurden.

4. Datenübertragungsverfahren, umfassend:
Empfangen, durch einen Sensorknoten (500), einer von einem Netzwerkknoten (400) gesandten Wecknachricht, wobei die Wecknachricht verwendet wird, auszulösen, dass der Sensorknoten aus einem Ruhezustand einer inaktiven Periode in einen geweckten Zustand eintritt;
Senden, durch den Sensorknoten, einer Antwortnachricht, die für die Wecknachricht ist, an den Netzwerkknoten; und
Durchführen, durch den Sensorknoten, von Datenübertragung mit dem Netzwerkknoten, wobei die Wecknachricht eine eingestellte Menge von Weckimpulsen ist und das Empfangen, durch einen Sensorknoten, einer von einem Netzwerkknoten gesandten Wecknachricht umfasst:
Empfangen, durch den Sensorknoten, der von dem Netzwerkknoten rundgesandten Weckimpulse; und
Bestimmen, durch den Sensorknoten gemäß den Weckimpulsen und einem im Voraus eingestellten Weckfaktor, ob aus dem Ruhezustand in den geweckten Zustand einzutreten ist, wobei Sensorknoten in verschiedenen PANs verschiedene korrespondierende Weckfaktoren aufweisen.

5. Verfahren nach Anspruch 4, nach dem Empfangen, durch einen Sensorknoten (500), einer von einem Netzwerkknoten (400) gesandten Wecknachricht und vor dem Senden, durch den Sensorknoten, einer Antwortnachricht, die für die Wecknachricht ist, an den Netzwerkknoten, ferner umfassend:
Empfangen, durch den Sensorknoten, eines Weckrahmens, rundgesandt durch den Netzwerkknoten, wobei der Weckrahmen Kennungsinformationen eines Bestimmungssensorknotens trägt; und
wenn der Sensorknoten aus dem Ruhezustand in den geweckten Zustand eintritt, Bestimmen, durch den Sensorknoten gemäß den Kennungsinformationen des Bestimmungssensorknotens, ob die Antwortnachricht an den Netzwerkknoten zu senden ist.

6. Verfahren nach einem der Ansprüche 4 oder 5, wobei die Antwortnachricht ein Datenanforderungsrahmen ist und der Datenanforderungsrahmen verwendet wird, den Empfang von Daten anzufordern; und das Durchführen, durch den Sensorknoten (500), von Datenübertragung mit dem Netzwerkknoten (400) umfasst: Empfangen, durch den Sensorknoten, von Daten, die von dem Netzwerkknoten gesandt wurden, gemäß dem Datenanforderungsrahmen; oder
die Antwortnachricht ein Bestätigungs- bzw. ACK-Rahmen ist und der ACK-Rahmen verwendet wird, anzugeben, dass der Bestimmungssensorknoten aus dem Ruhezustand in den geweckten Zustand eintritt; und das Durchführen, durch den Sensorknoten, von Datenübertragung mit dem Netzwerkknoten umfasst: Senden, durch den Sensorknoten, von Daten an den Netzwerkknoten.

7. Netzwerkknoten (400), umfassend:
ein Bestimmungsmodul (410), konfiguriert zum Bestimmen, dass ein Bestimmungssensorknoten (500) in einem persönlichen Netzwerk (PAN) und von zu übertragenden Daten in einer inaktiven Periode ist;
ein Sendemodul (420), konfiguriert zum Senden einer Wecknachricht an den Bestimmungssensorknoten, wobei die Wecknachricht verwendet wird, auszulösen, dass der Bestimmungssensorknoten aus einem Ruhezustand der inaktiven Periode in einen geweckten Zustand eintritt;
ein Empfangsmodul (430), konfiguriert zum Empfangen einer Antwortnachricht, die von dem Bestimmungssensorknoten und für die Wecknachricht ist; und
ein Übertragungsmodul (440), konfiguriert zum Durchführen von Datenübertragung mit dem Bestimmungssensorknoten gemäß der Antwortnachricht, wobei das Sendemodul speziell konfiguriert ist zum: wenn die Wecknachricht eine eingestellte Menge von Weckimpulsen ist, Rundsenden der Weckimpulse an jeden Sensorknoten in einem persönlichen Netzwerk PAN, zu dem der Netzwerkknoten gehört, so dass der Bestimmungssensorknoten bestimmt, gemäß den Weckimpulsen und einem im Voraus eingestellten Weckfaktor für das PAN, zu dem er gehört, ob aus dem Ruhezustand in den geweckten Zustand einzutreten ist, wobei Sensorknoten in verschiedenen PANs mit verschiedenen Weckfaktoren korrespondieren.

8. Netzwerkknoten (400) nach Anspruch 7, wobei das Sendemodul (420) ferner konfiguriert ist zum Rundsenden eines Weckrahmens an jeden Sensorknoten (500) in dem PAN, wobei der Weckrahmen Kennungsinformationen des Bestimmungssensorknotens trägt, so dass der Bestimmungssensorknoten gemäß den Kennungsinformationen bestimmt, die Antwortnachricht an den Netzwerkknoten zu senden.

9. Netzwerkknoten (400) nach einem der Ansprüche 7 oder 8, wobei das Übertragungsmodul (440) speziell konfiguriert ist zum: wenn die Antwortnachricht ein Datenanforderungsrahmen ist und der Datenanforderungsrahmen verwendet wird, den Empfang von Daten anzufordern, Senden von Daten an den Bestimmungssensorknoten (500) gemäß dem Datenanforderungsrahmen; oder
wenn die Antwortnachricht ein Bestätigungs- bzw. ACK-Rahmen ist und der ACK-Rahmen verwendet wird, anzugeben, dass der Bestimmungssensorknoten aus dem Ruhezustand in den geweckten Zustand eintritt, Empfangen von Daten, die von dem Bestimmungssensorknoten gesandt wurden.

10. Sensorknoten (500), umfassend:
ein Empfangsmodul (510), konfiguriert zum Empfangen einer von einem Netzwerkknoten (400) gesandten Wecknachricht, wobei die Wecknachricht verwendet wird, auszulösen, dass der Sensorknoten aus einem Ruhezustand einer inaktiven Periode in einen geweckten Zustand eintritt;
ein Sendemodul (520), konfiguriert zum Senden einer Antwortnachricht, die für die Wecknachricht ist, an den Netzwerkknoten; und
ein Übertragungsmodul (530), konfiguriert zum Durchführen von Datenübertragung mit dem Netzwerkknoten, wobei das Empfangsmodul speziell konfiguriert ist zum: wenn die Wecknachricht eine eingestellte Menge von Weckimpulsen ist, Empfangen der von dem Netzwerkknoten rundgesandten Weckimpulse und Bestimmen, gemäß den Weckimpulsen und einem im Voraus eingestellten Weckfaktor, ob aus dem Ruhezustand in den geweckten Zustand einzutreten ist, wobei Sensorknoten in verschiedenen PANs mit verschiedenen Weckfaktoren korrespondieren.

11. Sensorknoten (500) nach Anspruch 10, wobei das Empfangsmodul (510) ferner konfiguriert ist zum: Empfangen eines Weckrahmens, rundgesandt durch den Netzwerkknoten (400), wobei der Weckrahmen Kennungsinformationen eines Bestimmungssensorknotens trägt, und wenn der Sensorknoten aus dem Ruhezustand in den geweckten Zustand eintritt, Bestimmen, gemäß den Kennungsinformationen des Bestimmungssensorknotens, ob das Sendemodul (520) zu aktivieren ist.

12. Sensorknoten (500) nach einem der Ansprüche 10 oder 11, wobei das Übertragungsmodul (530) speziell konfiguriert ist zum: wenn die Antwortnachricht ein Datenanforderungsrahmen ist und der Datenanforderungsrahmen zum Anfordern des Empfangs von Daten verwendet wird, Empfangen von Daten, die von dem Netzwerkknoten (400) gemäß dem Datenanforderungsrahmen gesandt wurden; oder konfiguriert zum: wenn die Antwortnachricht ein Bestätigungs- bzw. ACK-Rahmen ist und der ACK-Rahmen verwendet wird, anzugeben, dass der Bestimmungssensorknoten aus dem Ruhezustand in den geweckten Zustand eintritt, Senden von Daten an den Netzwerkknoten.

## Revendications

1. Procédé de transmission de données, comprenant de :
déterminer, par un noeud de réseau (400), qu'un noeud capteur de destination (500) sur un réseau personnel (PAN) et de données à transmettre est dans une période d'inactivité ;
envoyer, par le noeud de réseau, un message de réveil au noeud capteur de destination, dans lequel le message de réveil est utilisé pour déclencher le noeud capteur de destination pour qu'il entre dans un état de réveil à partir d'un état dormant de la période d'inactivité ;
recevoir, par le noeud de réseau, un message de réponse qui provient du noeud capteur de destination et pour le message de réveil ; et
effectuer, par le noeud de réseau, une transmission de données avec le noeud capteur de destination selon le message de réponse, dans lequel le message de réveil est une quantité définie d'impulsions de réveil, et l'envoi, par le noeud de réseau, d'un message de réveil au noeud capteur de destination comprend de :
diffuser, par le noeud de réseau, les impulsions de réveil à chaque noeud capteur sur le réseau personnel PAN auquel le noeud de réseau appartient, de sorte que le noeud capteur de destination détermine, en fonction des impulsions de réveil et d'un facteur de réveil prédéfini pour le PAN auquel il appartient, s'il doit entrer dans l'état de réveil à partir l'état dormant, dans lequel des noeuds capteurs sur différents PAN correspondent à différents facteurs de réveil.

2. Procédé selon la revendication 1, après l'envoi, par le noeud de réseau (400), d'un message de réveil au noeud capteur de destination (500), et avant la réception, par le noeud de réseau, d'un message de réponse qui provient du noeud capteur de destination et pour le message de réveil, comprenant en outre de :
diffuser, par le noeud de réseau, une trame de réveil à chaque noeud capteur sur le PAN, dans lequel la trame de réveil contient des informations d'identification du noeud capteur de destination, de sorte que le noeud capteur de destination détermine, selon les informations d'identification, d'envoyer le message de réponse au noeud de réseau.

3. Procédé selon l'une quelconque des revendications 1 à 2, dans lequel le message de réponse est une trame de requête de données, et la trame de requête de données est utilisée pour demander à recevoir des données ; et l'exécution, par le noeud de réseau (400), d'une transmission de données avec le noeud capteur de destination (500) selon le message de réponse comprend de : envoyer, par le noeud de réseau, des données au noeud capteur de destination selon la trame de requête de données ; ou
le message de réponse est une trame ACK d'accusé de réception, et la trame ACK est utilisée pour indiquer que le noeud capteur de destination entre dans l'état de réveil à partir de l'état dormant ; et l'exécution, par le noeud de réseau, d'une transmission de données avec le noeud capteur de destination selon le message de réponse comprend de : recevoir, par le noeud de réseau, des données envoyées par le noeud capteur de destination.

4. Procédé de transmission de données, comprenant de :
recevoir, par un noeud capteur (500), un message de réveil envoyé par un noeud de réseau (400), dans lequel le message de réveil est utilisé pour déclencher le noeud capteur pour qu'il entre dans un état de réveil à partir d'un état dormant d'une période d'inactivité ;
envoyer, par le noeud capteur, un message de réponse qui est pour le message de réveil au noeud de réseau ; et
effectuer, par le noeud capteur, une transmission de données avec le noeud de réseau,
dans lequel le message de réveil est une quantité définie d'impulsions de réveil, et la réception, par un noeud capteur, d'un message de réveil envoyé par un noeud de réseau comprend de :
recevoir, par le noeud capteur, les impulsions de réveil diffusées par le noeud de réseau ; et
déterminer, par le noeud capteur en fonction des impulsions de réveil et d'un facteur de réveil prédéfini, s'il doit entrer dans l'état de réveil à partir de l'état dormant, dans lequel des noeuds capteurs sur différents PAN ont des facteurs de réveil correspondants différents.

5. Procédé selon la revendication 4, après la réception, par un noeud capteur (500), d'un message de réveil envoyé par un noeud de réseau (400), et avant l'envoi, par le noeud capteur, d'un message de réponse qui est pour le message de réveil au noeud de réseau, comprenant en outre de :
recevoir, par le noeud capteur, une trame de réveil diffusée par le noeud de réseau,
dans lequel la trame de réveil contient des informations d'identification d'un noeud capteur de destination ; et
si le noeud capteur entre dans l'état de réveil à partir de l'état dormant, déterminer, par le noeud capteur selon les informations d'identification du noeud capteur de destination, si le message de réponse doit être envoyé au noeud de réseau.

6. Procédé selon l'une quelconque des revendications 4 ou 5, dans lequel le message de réponse est une trame de requête de données, et la trame de requête de données est utilisée pour demander à recevoir des données ; et l'exécution, par le noeud capteur (500), d'une transmission de données avec le noeud de réseau (400) comprend de :
recevoir, par le noeud capteur, des données envoyées par le noeud de réseau selon la trame de requête de données ; ou
le message de réponse est une trame ACK d'accusé de réception, et la trame ACK est utilisée pour indiquer que le noeud capteur de destination entre dans l'état de réveil à partir de l'état dormant ; et l'exécution, par le noeud capteur, d'une transmission de données avec le noeud de réseau comprend de : envoyer, par le noeud capteur, des données au noeud de réseau.

7. Noeud de réseau (400), comprenant :
un module de détermination (410), configuré pour déterminer qu'un noeud capteur de destination (500) sur un réseau personnel (PAN) et de données à transmettre est dans une période d'inactivité ;
un module d'envoi (420), configuré pour envoyer un message de réveil au noeud capteur de destination, dans lequel le message de réveil est utilisé pour déclencher le noeud capteur de destination pour qu'il entre dans un état de réveil à partir d'un état dormant de la période d'inactivité ;
un module de réception (430), configuré pour recevoir un message de réponse qui provient du noeud capteur de destination et pour le message de réveil ; et
un module de transmission (440), configuré pour effectuer une transmission de données avec le noeud capteur de destination selon le message de réponse, dans lequel le module d'envoi est configuré spécifiquement pour : lorsque le message de réveil est une quantité définie d'impulsions de réveil, diffuser les impulsions de réveil à chaque noeud capteur sur un réseau personnel PAN auquel le noeud de réseau appartient, de sorte que le noeud capteur de destination détermine, en fonction des impulsions de réveil et d'un facteur de réveil prédéfini pour le PAN auquel il appartient, s'il doit entrer dans l'état de réveil à partir de l'état dormant, dans lequel des noeuds capteurs sur différents PAN correspondent à différents facteurs de réveil.

8. Noeud de réseau (400) selon la revendication 7, dans lequel le module d'envoi (420) est configuré en outre pour diffuser une trame de réveil à chaque noeud capteur (500) sur le PAN, dans lequel la trame de réveil contient des informations d'identification du noeud capteur de destination, de sorte que le noeud capteur de destination détermine, selon les informations d'identification, d'envoyer le message de réponse au noeud de réseau.

9. Noeud de réseau (400) selon l'une quelconque des revendications 7 ou 8, dans lequel le module de transmission (440) est configuré spécifiquement pour : lorsque le message de réponse est une trame de requête de données, et que la trame de requête de données est utilisée pour demander à recevoir des données, envoyer des données au noeud capteur de destination (500) selon la trame de requête de données ; ou lorsque le message de réponse est une trame ACK d'accusé de réception, et que la trame ACK est utilisée pour indiquer que le noeud capteur de destination entre dans l'état de réveil à partir de l'état dormant, recevoir des données envoyées par le noeud capteur de destination.

10. Noeud capteur (500), comprenant :
un module de réception (510), configuré pour recevoir un message de réveil envoyé par un noeud de réseau (400), dans lequel le message de réveil est utilisé pour déclencher le noeud capteur pour qu'il entre dans un état de réveil à partir d'un état dormant d'une période d'inactivité ;
un module d'envoi (520), configuré pour envoyer un message de réponse qui est pour le message de réveil au noeud de réseau ; et
un module de transmission (530), configuré pour effectuer une transmission de données avec le noeud de réseau, dans lequel le module de réception est configuré spécifiquement pour : lorsque le message de réveil est une quantité définie d'impulsions de réveil, recevoir les impulsions de réveil diffusées par le noeud de réseau, et déterminer, selon les impulsions de réveil et un facteur de réveil prédéfini, s'il faut entrer dans l'état de réveil à partir de l'état dormant, dans lequel des noeuds capteurs sur des PAN différents correspondent à différents facteurs de réveil.

11. Noeud de capteur (500) selon la revendication 10, dans lequel le module de réception (510) est configuré en outre pour : recevoir une trame de réveil diffusée par le noeud de réseau (400), dans lequel la trame de réveil contient les informations d'identification d'un noeud capteur de destination, et si le noeud capteur entre dans l'état de réveil à partir de l'état dormant, déterminer, selon les informations d'identification du noeud capteur de destination, si le module d'envoi (520) doit être activé.

12. Noeud capteur (500) selon l'une quelconque des revendications 10 ou 11, dans lequel le module d'émission (530) est configuré spécifiquement pour : lorsque le message de réponse est une trame de requête de données et que la trame de requête de données est utilisée pour demander à recevoir des données, recevoir des données envoyées par le noeud de réseau (400) selon la trame de requête de données ; ou
configuré pour : lorsque le message de réponse est une trame ACK d'accusé de réception et que la trame ACK est utilisée pour indiquer que le noeud capteur de destination entre dans l'état de réveil à partir de l'état dormant, envoyer des données au noeud de réseau.
